# EUROPEAN PATENT APPLICATION

(11) **EP 4 624 150 A1**
(43) Date of publication of application: **01.10.2025**
(21) Application number: 25165345.7
(22) Date of filing: 21.03.2025
(51) Int. Cl.: B32B 15/08, B32B 27/08, B32B 5/26, F01D 5/28, F01D 25/00

(54) **THERMALLY INSULATING DETAIL FOR HIGH-TEMPERATURE POLYMER MATRIX APPLICATIONS**

(30) Priority: 25.03.2024 US 202418614808
(71) Applicant: RTX Corporation, Farmington, CT 06032 (US)
(72) Inventor: White III, Robert A., Meriden, 06450 (US); Shahab, Farruqh, East Hartford, 06118 (US)
(74) Representative: Schmitt-Nilson Schraud Waibel Wohlfrom Patentanwälte Partnerschaft mbB

(57) **Abstract**

A heat shield for polymer matrix composite material structure including at least one layer of polymer matrix composite material comprising materials made up of fibers that are embedded in an organic polymer matrix, the at least one layer having a first side opposite a second side; and a heat shield in operative communication with the at least one layer of polymer matrix composite material, wherein the heat shield comprises a material composition thermally resistant to a thermal energy sufficient to degrade the polymer matrix composite material structure.

## Description

The present disclosure is directed to the improved heat shield for polymer matrix composite (PMC) material structures. Particularly a heat shield material affixed to the polymer matrix composite material structure and coated with a thermally insulating coating.

Polymer matrix composite components for use in high temperature applications is a relatively new design concept that is being explored for low/high pressure compressor (LPC/HPC) and fan bypass environments. Common configurations employ carbon-reinforced polyimide (PI) materials as a means of withstanding these elevated temperature environments.

Increased engine performance often leads to increased environmental temperatures, and alternate solutions must be available as legacy component materials become insufficient. Carbon-reinforced polyimide materials can lead the way in matrix selection for high temperature PMC applications, yet some applications require materials which have even higher temperature capabilities.

These alternate materials (commonly metallic) are often heavier than the PMC and have adverse impacts on performance which can ultimately negate the performance advantage resulting from the increased environmental temperatures.

It is desired to preserve the use of these lighter PMC materials, while also having the ability to run the engine hotter, and ultimately enhance efficiency.

In accordance with the present disclosure, there is provided a heat shield for polymer matrix composite material structure comprising at least one layer of polymer matrix composite material comprising materials made up of fibers that are embedded in an organic polymer matrix, the at least one layer having a first side opposite a second side; and a heat shield in operative communication with the at least one layer of polymer matrix composite material, wherein the heat shield comprises a material composition thermally resistant to a thermal energy sufficient to degrade the polymer matrix composite material structure.

Particular embodiments further may include at least one, or a plurality of, the following optional features, alone or in combination with each other:

A further embodiment of any of the foregoing embodiments may additionally and/or alternatively include the heat shield comprises materials selected from the group consisting of a Ti-based alloy, a Co-based alloy, a Ni-based alloy and combinations thereof.

A further embodiment of any of the foregoing embodiments may additionally and/or alternatively include the heat shield can be at least one of bonded with the at least one layer, integrated into the at least one layer, fastened to the at least one layer and the like.

A further embodiment of any of the foregoing embodiments may additionally and/or alternatively include the at least one layer first side and at least one layer second side both include surfaces, wherein the heat shield conforms with flat surfaces, curved surfaces, contoured surfaces and the like.

A further embodiment of any of the foregoing embodiments may additionally and/or alternatively include the heat shield for polymer matrix composite material structure further comprising a thermal barrier coating formed on an exterior surface of the heat shield.

A further embodiment of any of the foregoing embodiments may additionally and/or alternatively include the heat shield for polymer matrix composite material structure further comprising an environmental barrier layer formed over the thermal barrier layer.

A further embodiment of any of the foregoing embodiments may additionally and/or alternatively include the heat shield for polymer matrix composite material structure further comprising an environmental barrier layer formed over the heat shield.

In accordance with the present disclosure, there is provided a heat shield for polymer matrix composite material component for a gas turbine engine comprising multiple layers of polymer matrix composite material comprising materials made up of fibers that are embedded in an organic polymer matrix, the component having a first side opposite a second side; and the heat shield in operative communication with at least one of the first side and the second side, wherein the heat shield comprises a material composition thermally resistant to a thermal energy sufficient to degrade and/or compromise structural integrity characteristics of the multiple layers of polymer matrix composite material.

Particular embodiments further may include at least one, or a plurality of, the following optional features, alone or in combination with each other:

A further embodiment of any of the foregoing embodiments may additionally and/or alternatively include the heat shield is configured as at least one of a sheet material and a plate material.

A further embodiment of any of the foregoing embodiments may additionally and/or alternatively include the heat shield is integrated into a layup of the polymer matrix composite material overlapping with at least one layer of the multiple layers.

A further embodiment of any of the foregoing embodiments may additionally and/or alternatively include the heat shield for polymer matrix composite material component for a gas turbine engine further comprising overlap regions located proximate the heat shield intersection with the polymer matrix composite material at least one layer.

A further embodiment of any of the foregoing embodiments may additionally and/or alternatively include the heat shield for polymer matrix composite material component for a gas turbine engine further comprising a bond coat layered over at least one of the first side and the second side, wherein the heat shield is attached to the bond coat.

A further embodiment of any of the foregoing embodiments may additionally and/or alternatively include the heat shield comprises material properties selected from the group consisting of stiffness, thermal coefficient of expansion, heat transfer coefficient and the like configured to preserve the material properties of the polymer matrix composite material.

In accordance with the present disclosure, there is provided a process for employing a heat shield for polymer matrix composite material component comprising forming multiple layers of polymer matrix composite material comprising materials made up of fibers that are embedded in an organic polymer matrix, the component having a first side opposite a second side; forming a heat shield comprising a material composition thermally resistant to a thermal energy sufficient to degrade the multiple layers of polymer matrix composite material; and coupling the heat shield in operative communication with at least one of the first side and the second side.

Particular embodiments further may include at least one, or a plurality of, the following optional features, alone or in combination with each other:

A further embodiment of any of the foregoing embodiments may additionally and/or alternatively include the process further comprising co-bonding the heat shield with the multiple layers of polymer matrix composite material during a cure step in the manufacture of the multiple layers of polymer matrix composite material.

A further embodiment of any of the foregoing embodiments may additionally and/or alternatively include the process further comprising curing the polymer matrix composite material prior to integrating the heat shield with the multiple layers of polymer matrix composite material.

A further embodiment of any of the foregoing embodiments may additionally and/or alternatively include the process further comprising selecting a material composition of the heat shield responsive to matching a coefficient of thermal expansion with the multiple layers of polymer matrix composite material.

A further embodiment of any of the foregoing embodiments may additionally and/or alternatively include the process further comprising forming a thermal barrier coating on an exterior surface of the heat shield.

A further embodiment of any of the foregoing embodiments may additionally and/or alternatively include the process further comprising forming an environmental barrier layer over at least one of the heat shield and a thermal barrier layer.

A further embodiment of any of the foregoing embodiments may additionally and/or alternatively include the process further comprising partial curing the polymer matrix composite material prior to integrating the heat shield with the multiple layers of polymer matrix composite material.

Other details of the heat shield for polymer matrix composite (PMC) material structures are set forth in the following detailed description and the accompanying drawings wherein like reference numerals depict like elements.
Fig. 1 is a cross section view of an exemplary gas turbine engine.
Fig. 2 is a cross section schematic representation of an exemplary polymer matrix composite material component.
Fig. 3 is a cross section schematic representation of an exemplary polymer matrix composite material component.
Fig. 4 is a cross section schematic representation of an exemplary polymer matrix composite material component.
Fig. 5 is a cross section schematic representation of an exemplary polymer matrix composite material component.

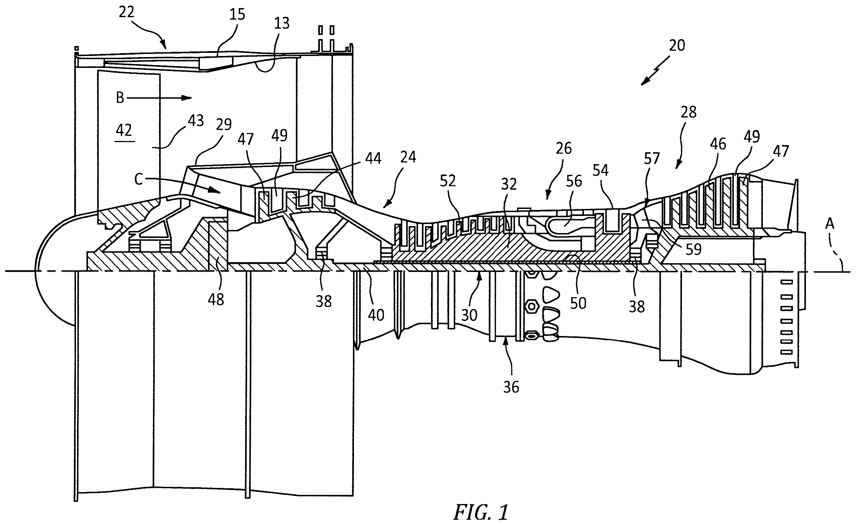

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 may include a single-stage fan 42 having a plurality of fan blades 43. The fan blades 43 may have a fixed stagger angle or may have a variable pitch to direct incoming airflow from an engine inlet. The fan 42 drives air along a bypass flow path B in a bypass duct 13 defined within a housing 15 such, as a fan case or nacelle, and also drives air along a core flow path C for compression and communication into the combustor section 26 then expansion through the turbine section 28. A splitter 29 aft of the fan 42 divides the air between the bypass flow path B and the core flow path C. The housing 15 may surround the fan 42 to establish an outer diameter of the bypass duct 13. The splitter 29 may establish an inner diameter of the bypass duct 13. Although depicted as a two-spool turbofan gas turbine engine in the disclosed nonlimiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects, a first (or low) pressure compressor 44 and a first (or low) pressure turbine 46. The inner shaft 40 is connected to the fan 42 through a speed change mechanism, which in the exemplary gas turbine engine 20 is illustrated as a geared architecture 48 to drive the fan 42 at a lower speed than the low speed spool 30. The inner shaft 40 may interconnect the low pressure compressor 44 and low pressure turbine 46 such that the low pressure compressor 44 and low pressure turbine 46 are rotatable at a common speed and in a common direction. In other embodiments, the low pressure turbine 46 drives both the fan 42 and low pressure compressor 44 through the geared architecture 48 such that the fan 42 and low pressure compressor 44 are rotatable at a common speed. Although this application discloses geared architecture 48, its teaching may benefit direct drive engines having no geared architecture. The high speed spool 32 includes an outer shaft 50 that interconnects a second (or high) pressure compressor 52 and a second (or high) pressure turbine 54. A combustor 56 is arranged in the exemplary gas turbine 20 between the high pressure compressor 52 and the high pressure turbine 54. A mid-turbine frame 57 of the engine static structure 36 may be arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

Airflow in the core flow path C is compressed by the low pressure compressor 44 then the high pressure compressor 52, mixed and burned with fuel in the combustor 56, then expanded through the high pressure turbine 54 and low pressure turbine 46. The mid-turbine frame 57 includes airfoils 59 which are in the core flow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor, or aft of the combustor section 26 or even aft of turbine section 28, and fan 42 may be positioned forward or aft of the location of gear system 48.

The low pressure compressor 44, high pressure compressor 52, high pressure turbine 54 and low pressure turbine 46 each include one or more stages having a row of rotatable airfoils. Each stage may include a row of static vanes adjacent the rotatable airfoils. The rotatable airfoils and vanes are schematically indicated at 47 and 49.

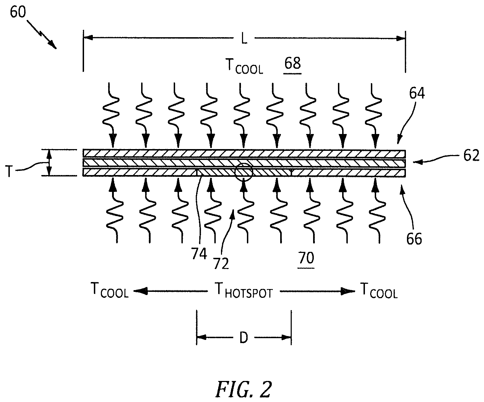

Referring also to Fig. 2 an exemplary polymer matrix composite material component 60. The polymer matrix composite material component 60 can be selected from a group including vanes, blades, ducts, cases, nozzle flaps and the like. The polymer matrix composites are materials made up of fibers that are embedded in an organic polymer matrix. These fibers are introduced to enhance selected properties of the material. Polymers are reinforced with fibers which can be continuous single or chopped multi-filaments that are woven into cloth and other types of preformed textiles. These fibers can be impregnated into the matrix polymer in liquid form by injection, extrusion, pressing or stamping and then cured to produce the final composite. The polymer matrix composite material component 60 can include layers 62. The layers 62 can overlap and stack as needed. The polymer matrix composite material component 60 is shown with three layers 62, but more or less layers 62 are contemplated. The polymer matrix composite material component 60 can include a first side 64 and a second side 66 opposite the first side 64. The polymer matrix composite material component 60 can include a length L dimension and a thickness T dimension.

As shown in Fig. 2, the polymer matrix composite material component 60 is exposed to a first thermal environment 68 proximate the first side 64. The first thermal environment 68 includes a temperature T_{cool}. The T_{cool} temperature is within temperature range that is below a temperature threshold that can cause damage to the polymer matrix composite material component 60. The polymer matrix composite material component 60 is exposed to a second thermal environment 70 proximate the second side 66. The second thermal environment 70 includes a temperature Tₕₒₜₛₚₒₜ as well as temperatures T_{cool}. The Tₕₒₜₛₚₒₜ temperature is within a temperature range that can cause damage to the polymer matrix composite material component 60. The second thermal environment 70 may not be a uniform temperature. The Tₕₒₜₛₚₒₜ can impact a specific region of the polymer matrix composite material component 60 called a hotspot region 72. The hotspot region 72 can span along the length L for a certain distance D. In exemplary embodiments, the distance D can be a portion of the length L or the entire length L. It is contemplated that there can be multiple hotspot regions 72 along the length L and on any and all sides 64, 66, of the polymer matrix composite material component 60.

The polymer matrix composite material component 60 can include a heat shield 74. The heat shield 74 can be made from a material composition thermally resistant to a thermal energy sufficient to degrade and/or compromise structural integrity characteristics of the multiple layers 62 of the polymer matrix composite material component 60. There can be multiple heat shields 74 for a given polymer matrix composite material component 60. The heat shield 74 can be a formation of material that can withstand a higher temperature environment, such as Tₕₒₜₛₚₒₜ, than the remainder of the polymer matrix composite material component 60, in the absence of material degradation.

An example material composition of the heat shield 74 can include any one of or combination of a Ti-based alloy, such as Ti₆Al₄ and the like; a Co-based alloy, such as, Haynes^{™} 25/188, MAR-M-509, and the like; and/or a Ni-based alloy such as, Inconel^{™} 718, Waspaloy^{™}, Inconel^{™} 625, Hastelloy^{™} X/S, Haynes^{™} 214, and the like, but may not be limited to such materials.

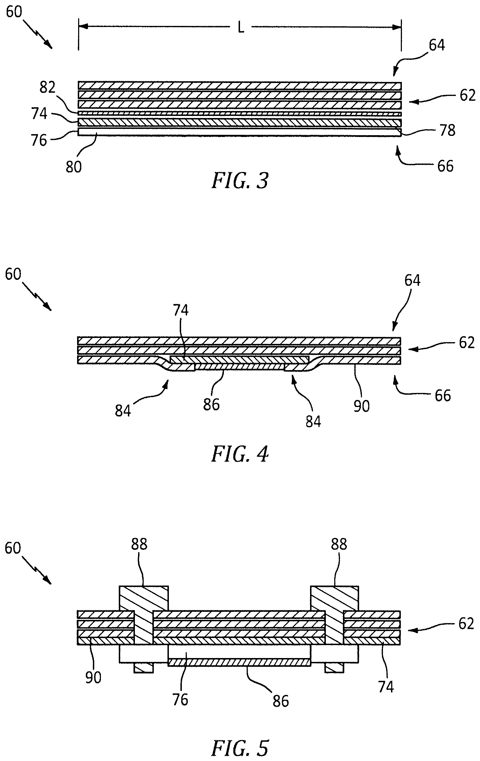

Referring also to Fig. 3 through Fig. 5, the heat shield 74 can be formed on flat surfaces as well as curved or contoured surfaces and the like. The heat shield 74 can be configured to conform to the surface of the polymer matrix composite material component 60.

The heat shield 74 can include a coating 76 on an exterior surface 78 of the heat shield 74. The coating 76 can be a thermally insulating layer, such as a thermal barrier coating (TBC) 80. The thermal barrier coating 80 can have material properties that protect the polymer matrix composite component 60 from excessive thermal energy exposure. The thermal barrier coating 80 can be a ceramic thermal barrier coating 80 that includes gadolinia, zirconia, yttria, or combinations thereof. The heat shield 74 can include the thermal barrier coating 80 applied which is compatible (e.g., CTE match, adhesion, inert anti-spallation, phase transformation) with the material of the heat shield 74. The thermal barrier coating 80 can be applied before or after the heat shield 74 is affixed to the polymer matrix composite component 60, depending on the method used to join the heat shield 74 with the polymer matrix composite component 60.

The heat shield 74 can be attached directly to the polymer composite material component 60. The heat shield 74 can be co-bonded with the polymer composite material component 60. In exemplary embodiments, the heat shield 74 can be attached to a bond coat 82 made of an intermediate adhesive material.

The heat shield 74 can be configured as a sheet material or plate material. As seen in Fig. 4, the heat shield 74 can be integrated into the layup of the polymer composite material and overlap with some of the layers 62. The layers 62 can have overlap regions 84 at locations the heat shield 74 intersects with polymer composite material layers 62.

An environmental barrier layer 86 can be formed over the heat shield 74 as seen in Fig. 4. It is also contemplated that the environmental barrier layer 86 is formed over the thermal barrier layer 80. The environmental barrier layer 86 can be a machinable coating that can be machined to provide a predetermined surface finish, that enhances contact with other components and/or enhances aerodynamic performance. The environmental barrier layer 86 can be present on the surface 90 at a thickness of greater than or equal to about 0.5 mils (0.0005 inch), preferably between about 3 to about 30 mils and ideally between about 3 to about 5 mils. The environmental barrier layer 86 can be applied to the surface 90 by use of suspension plasma spray, electron-beam physical vapor deposition, or an air plasma spray, as well as, slurry based methods including dipping, painting and spraying.

The heat shield 74 can be configured with certain material properties, such as stiffness, strength, toughness, durability, and the like to provide a structural enhancement and to preserve the composite material. The heat shield 74 can be porous material to enhance thermal resistance properties and reduce weight.

As seen in Fig. 5 the heat shield 74 can be attached to the composite material layers 62 by mechanical fasteners 88. The heat shield 74 can be co-bonded with the polymer matrix composite layers 62 during a cure step in the manufacture of the polymer matrix composite layers 62. In another embodiment, the polymer matrix composite material can be partially cured prior to integrating the heat shield with the multiple layers 62 of polymer matrix composite material 60. In such cases where the polymer matrix composite 60 is cured prior to integrating the heat shield 74, the surface 90 may be sanded, polished, machined, or worked in some other fashion, and/or left as-cured to provide an adequate surface 90 for the heat shield 74 to mate against. In such cases where the polymer matrix composite is cured along with the heat shield 74. The heat shield 74 material can be selected based on a coefficient of thermal expansion matching, which tends to limit ply distortion and yield more favorable laminate quality.

A technical advantage of the disclosed heat shield for polymer matrix composite material structures includes enabling the use of PMCs in high temperature environments that would typically not allow for such use.

Another technical advantage of the disclosed heat shield for polymer matrix composite material structures includes the extension of part life by preserving PMC material strength/stiffness through temperature reduction, reducing thermal fatigue, and potentially reducing oxidation and moisture absorption which adversely impacts the composite material properties.

Another technical advantage of the disclosed heat shield for polymer matrix composite material structures includes utilizing lower temperature capable matrices, where polyimide material would typically need to be employed.

Another technical advantage of the disclosed heat shield for polymer matrix composite material structures includes improving the producibility of the polyimide polymer matrix composite material which are typically more difficult to process.

Another technical advantage of the disclosed heat shield for polymer matrix composite material structures includes reducing the raw material cost since polyimide materials are relatively expensive.

Another technical advantage of the disclosed heat shield for polymer matrix composite material structures includes expanding the realm of possibilities for polymer matrix composite material selection which can be tailored towards the design requirements.

Another technical advantage of the disclosed heat shield for polymer matrix composite material structures includes being utilized on polymer matrix composite designs to improve operability and efficiency.

There has been provided a heat shield for polymer matrix composite (PMC) material structures. While the heat shield for polymer matrix composite (PMC) material structures has been described in the context of specific embodiments thereof, other unforeseen alternatives, modifications, and variations may become apparent to those skilled in the art having read the foregoing description. Accordingly, it is intended to embrace those alternatives, modifications, and variations which fall within the broad scope of the appended claims.

## Claims

1. A heat shield for polymer matrix composite material structure comprising:
at least one layer of polymer matrix composite material comprising materials made up of fibers that are embedded in an organic polymer matrix; and
a heat shield in operative communication with the at least one layer of polymer matrix composite material, wherein the heat shield comprises a material composition thermally resistant to a thermal energy sufficient to degrade the polymer matrix composite material structure.

2. The heat shield for polymer matrix composite material structure according to claim 1,
wherein the heat shield comprises materials selected from the group consisting of a Ti-based alloy, a Co-based alloy, a Ni-based alloy and combinations thereof; and/or
wherein the heat shield can be at least one of bonded with the at least one layer, integrated into the at least one layer, fastened to the at least one layer and the like.

3. The heat shield for polymer matrix composite material structure according to claim 1 or 2,
wherein the at least one layer has a first side opposite a second side, the at least one layer first side and at least one layer second side both include surfaces, wherein the heat shield conforms with flat surfaces, curved surfaces, contoured surfaces and the like.

4. The heat shield for polymer matrix composite material structure according to any of claims 1 to 3,
further comprising:
a thermal barrier coating formed on an exterior surface of the heat shield.

5. The heat shield for polymer matrix composite material structure according to any of claims 1 to 4,
further comprising:
an environmental barrier layer formed over the thermal barrier layer; or
an environmental barrier layer formed over the heat shield.

6. A heat shield for polymer matrix composite material component for a gas turbine engine comprising the heat shield for polymer matrix composite material structure according to any of claims 1 to 5,
comprising:
multiple layers of polymer matrix composite material comprising materials made up of fibers that are embedded in an organic polymer matrix, the component having a first side opposite a second side; and
the heat shield in operative communication with at least one of the first side and the second side, wherein the heat shield comprises a material composition thermally resistant to a thermal energy sufficient to degrade and/or compromise structural integrity characteristics of the multiple layers of polymer matrix composite material.

7. The heat shield for polymer matrix composite material component for a gas turbine engine according to claim 6,
wherein the heat shield is configured as at least one of a sheet material and a plate material.

8. The heat shield for polymer matrix composite material component for a gas turbine engine according to claim 6 or 7,
wherein the heat shield is integrated into a layup of the polymer matrix composite material overlapping with at least one layer of the multiple layers.

9. The heat shield for polymer matrix composite material component for a gas turbine engine according to any of claims 6 to 8,
further comprising:
overlap regions located proximate the heat shield intersection with the polymer matrix composite material at least one layer.

10. The heat shield for polymer matrix composite material component for a gas turbine engine according to any of claims 6 to 9,
further comprising:
a bond coat layered over at least one of the first side and the second side, wherein the heat shield is attached to the bond coat.

11. The heat shield for polymer matrix composite material component for a gas turbine engine according to any of claims 6 to 10,
wherein the heat shield comprises material properties selected from the group consisting of stiffness, thermal coefficient of expansion, heat transfer coefficient and the like configured to preserve the material properties of the polymer matrix composite material.

12. A process for employing a heat shield for polymer matrix composite material component comprising:
forming multiple layers of polymer matrix composite material comprising materials made up of fibers that are embedded in an organic polymer matrix, the component having a first side opposite a second side;
forming a heat shield comprising a material composition thermally resistant to a thermal energy sufficient to degrade the multiple layers of polymer matrix composite material; and
coupling the heat shield in operative communication with at least one of the first side and the second side.

13. The process of claim 12,
further comprising:
co-bonding the heat shield with the multiple layers of polymer matrix composite material during a cure step in the manufacture of the multiple layers of polymer matrix composite material.

14. The process of claim 12 or 13,
further comprising:
curing the polymer matrix composite material prior to integrating the heat shield with the multiple layers of polymer matrix composite material; and/or
selecting a material composition of the heat shield responsive to matching a coefficient of thermal expansion with the multiple layers of polymer matrix composite material.

15. The process of any of claims 12 to 14,
further comprising:
forming a thermal barrier coating on an exterior surface of the heat shield; and/or
forming an environmental barrier layer over at least one of the heat shield and a thermal barrier layer; and/or
partial curing the polymer matrix composite material prior to integrating the heat shield with the multiple layers of polymer matrix composite material.
